(19) Europäisches Patentamt
European Patent Office
Office européen des brevets

(11) **EP 3 869 380 A1**

(12) **EUROPÄISCHE PATENTANMELDUNG**

(43) Veröffentlichungstag:
**25.08.2021 Patentblatt 2021/34**

(21) Anmeldenummer: **20157861.4**

(22) Anmeldetag: **18.02.2020**

(51) Int Cl.:
*G06F 30/337* (2020.01)   *G06F 30/347* (2020.01)
*G06F 30/392* (2020.01)   *G06F 115/08* (2020.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **dspace digital signal processing and control engineering GmbH
33102 Paderborn (DE)**

(72) Erfinder:
• **Kalte, Heiko
  33102 Paderborn (DE)**
• **Lubeley, Dominik
  33102 Paderborn (DE)**

(54) **VERFAHREN, COMPUTERBASIERTES SYSTEM UND COMPUTERPROGRAMM-PRODUKT ZUM FLOORPLANNING FÜR EINE PROGRAMMIERBARE GATTERANORDNUNG MIT NICHT-RECHTECKIGEN BLOCKGRENZEN**

(57)   Die Erfindung betrifft ein Verfahren zur Planung der Ausgestaltung von Partitionen (14, 16) für eine unterschiedliche Klassen von Logikelementen (12) vorgegebener Position umfassende programmierbare Gatteranordnung (10) und eine Mehrzahl von Programmroutinen, die zumindest eine erste Programmroutine und mindestens eine weitere Programmroutine umfasst. Es sind die folgenden Verfahrensschritte vorgesehen: Bereitstellen einer Zuordnung einer ersten Partition (14) der programmierbaren Gatteranordnung (10) zu der ersten Programmroutine und mindestens eine weitere Partition (16) der programmierbaren Gatteranordnung zu der mindestens einen weiteren Programmroutine (S1), Ermittlung eines Bedarfs der ersten Programmroutine an den einzelnen Klassen von Logikelementen (12) (S2),

Abgleich dieses Bedarfs mit den in der ersten Partition (14) vorhandenen Ressourcen an Logikelementen (12) entsprechender Klasse (S3), und
Überführen von zumindest einem Logikelement (12) entsprechender Klasse aus der weiteren Partition (16) oder mindestens einer der weiteren Partitionen in die erste Partition (14) durch Veränderung des Verlaufs der Partitionsgrenze (18) zwischen diesen Partitionen (14, 16), wenn der Bedarf der ersten Programmroutine an Logikelementen dieser Klasse die entsprechenden Ressourcen der ersten Partition (14) übersteigt (S4), wobei die Partitionsgrenze (18) vor und/oder nach der Veränderung ihres Verlaufs in mindestens einem Abschnitt gewundenen verläuft.

Fig. 1

EP 3 869 380 A1

**Beschreibung**

Die vorliegende Erfindung betrifft ein Verfahren zur Planung der Ausgestaltung von Partitionen für eine unterschiedliche Klassen von Logikelementen vorgegebener Position umfassende programmierbare Gatteranordnung und für eine Mehrzahl von Programmroutinen, die zumindest eine erste Programmroutine und mindestens eine weitere Programmroutine umfasst.

Die Erfindung betrifft weiterhin ein computerbasiertes System und ein Computerprogrammprodukt zur Durchführung eines derartigen Verfahrens.

Ein sogenannter Field Programmable Gate Array (FPGA) ist ein integrierter Schaltkreis in Form einer programmierbaren Gatteranordnung, die digitale Funktionsblöcke mit Logikelementen enthält, die vom Anwender programmiert und verschaltet werden können. Entsprechende Programmroutinen geben dann ein FPGA-Design, also eine Ausgestaltung von Partitionen für die jeweilige Programmroutine vor. Die zugehörige Entwicklung eines FPGA-Designs wird auch als "Floorplanning" bezeichnet. Ein Teilaspekt dieses Floorplannings ist die Planung der Ausgestaltung von entsprechenden Partitionen bei vorgegebener Zahl und Position von Logikelementen unterschiedlicher Klassen der programmierbaren Gatteranordnung.

Typischerweise erfolgt die Entwicklung eines FPGA-Designs inkrementell. Erhöht sich in einem Entwicklungsschritt der Bedarf einer Programmlogik an FPGA-Ressourcen, sodass eine Vergrößerung der Partition nötig ist, ist der bestehende Floorplan im allgemeinen hinfällig, und es muss ein vollständig neuer Aufbau ("Build")des FPGAs durchgeführt werden. Der Entwicklungsprozess ist dadurch enorm zeitaufwendig.

Beispielhaft für eine solche inkrementelle Entwicklung eines FPGA-Designs sei die abstrahierende FPGA Entwicklungsumgebung "FPGA Programming Blockset" und entsprechende Hardware-Boards der Anmelderin dspace genannt, die es einem Nutzer ermöglichen, auch ohne detaillierte Kenntnisse über FPGAs und Toolflows eigene Hardware zu entwickeln. Modellbasiert kann der Nutzer FPGA-Designs erstellen, implementieren und auf entsprechender Hardware betreiben. Regelmäßige Änderungen am FPGA Model mit anschließendem Re-Build sind natürlicher Bestandteil des Entwicklungsprozesses (z.B. bei Rapid Control Prototyping).

Das Problem beim Wiederaufbau ("Re-Build") eines FPGAs sind die sehr großen Aufbau-Zeiten ("Build-Zeiten"), die oft im Bereich von Stunden liegen. Da die FPGAs immer komplexer werden und mehr Ressourcen (Register, Logik, DSP Blöcke, Speicher) bereitstellen, werden die Aufbau-Zeiten immer höher. Dies kann nur teilweise durch bessere Build-Algorithmen (z.B. Platzierung und Routing) und schnellere Rechner kompensiert werden. Derzeit ist es üblich, bei der kleinsten Änderung das komplette FPGA neu aufzubauen.

Die FPGA-Werkzeughersteller bieten für das Problem der langen Aufbauzeiten Ansätze wie z.B. den "Hierachical Design Flow". Bei diesem hierarchischen Aufbau wird das Gesamtmodell in Teile unterteilt, für die dann Regionen im FPGA exklusiv reserviert werden. Auf diese Weise kann z.B. der Aufbauprozess der Modellteile auf mehrere Rechner parallel verteilt und beschleunigt werden. Zusätzlich können auch bereits implementierte Teile, die sich bei einem Aufbau nicht verändert haben, wiederverwendet werden. Die Patentschrift US 9,870,440 B2 beschreibt ein derartiges Vorgehen.

Ein wesentlicher Aspekt ist hierbei die Erstellung des Floorplans, der die Regionen der Teilmodelle im FPGA bestimmt, die dann unabhängig und parallel gebaut werden können. Hierbei ist zu beachten, dass jedem Teilmodell genug Ressourcen an Logikelementen zur Verfügung gestellt werden. Neben den eigentlichen Logikelementen (CLBs) als Ressource gibt es auch noch dedizierte Logikelemente, wie z.B. RAMs oder DSPs. Diese sind jedoch meist in deutlich geringerer Anzahl vorhanden und inhomogen über das FPGA verteilt. Dadurch ergibt sich ein komplexes Floorplanning Problem, welches neben dem Ressourcenbedarf der einzelnen Teilmodelle auch die Distanz der Module und somit die Länge der Kommunikationsleitungen zwischen den Teilmodellen berücksichtigen muss.

Ausgehend von dem oben genannten Stand der Technik liegt der Erfindung somit die Aufgabe zugrunde, ein Verfahren zur Ausgestaltung von Partitionen einer programmierbaren Gatteranordnung sowie ein System und ein Computerprogrammprodukt zur Durchführung dieses Verfahrens anzugeben, welche eine Reduzierung der Aufbau-Zeiten, insbesondere bei einem Wiederaufbau, einer programmierbaren Gatteranordnung ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei dem erfindungsgemäßen Verfahren zur Planung der Ausgestaltung von Partitionen für eine unterschiedliche Klassen von Logikelementen vorgegebener Position umfassende programmierbare Gatteranordnung und eine Mehrzahl von Programmroutinen, die zumindest eine erste Programmroutine und mindestens eine weitere Programmroutine umfasst, sind die folgenden Verfahrensschritte vorgesehen:

(i) Bereitstellen einer Zuordnung einer ersten Partition der programmierbaren Gatteranordnung zu der ersten Programmroutine und mindestens eine weitere Partition der programmierbaren Gatteranordnung zu der mindestens einen weiteren Programmroutine wobei diese Partitionen durch eine aktuelle Partitionsgrenze voneinander getrennt sind (S1),

(ii) Ermittlung eines Bedarfs der ersten Programmroutine an den einzelnen Klassen von Logikelementen,

(iii)Abgleich dieses Bedarfs mit den in der ersten Partition vorhandenen Ressourcen an Logikelementen entsprechender Klasse, und

(iv) Auswählen und Überführen von zumindest einem Logikelement entsprechender Klasse aus der weiteren Partition oder mindestens einer der weiteren Partitionen in die erste Partition durch Veränderung des Verlaufs der Partitionsgrenze zwischen diesen Partitionen, wenn der Bedarf der ersten Programmroutine an Logikelementen dieser Klasse die entsprechenden Ressourcen der ersten Partition übersteigt, wobei die Partitionsgrenze vor und/oder nach der Veränderung ihres Verlaufs in mindestens einem Abschnitt gewundenen verläuft. Durch diese Art des Überführens von Logikelementen durch Verändern des Verlaufs der Partitionsgrenze ergeben sich neue Möglichkeiten der Planung (neues Floorplanning NFP). Um diese Möglichkeiten besonders effizient zu nutzen, bedarf es nur noch einer geschickten Auswahl der zu überführenden Logikelemente und entsprechender Möglichkeiten bei der Änderung des Verlaufs der entsprechenden Partitionsgrenze.

Erfindungsgemäß wird die Partitionsgrenze nicht unter Beibehaltung ihres bisherigen, insbesondere linearen, Verlaufs einfach verschoben. Die Partitionsgrenze weist durch das Überführen des zumindest einen Logikelements zumindest Abschnittsweise einen mäanderartigen Verlauf auf. Ein solcher gewundener Verlauf ist durch Schleifen geprägt und alles andere als Linear. Dabei bildet zumindest eine Schleife einen Vorsprung der ersten Partition in die bzw. eine der weiteren Partition(en). In diesem Vorsprung befindet sich dann das überführte Logikelement bzw. mindestens eines der überführten Logikelemente. Dabei ist mit Vorteil vorgesehen, dass die Partitionsgrenze durch das Überführen des zumindest einen Logikelements einen weniger linearen Verlauf aufweist als vor dem Überführen.

Das Verfahren ist insbesondere ein computerimplementiertes Verfahren.

Bei dem Verfahren ist insbesondere vorgesehen, dass eine Auswahl der zu überführenden Logikelemente über eine gewichtete Abstandsfunktion des Abstandes des jeweiligen Logikelements von dem aktuellen Verlauf der Partitionsgrenze abhängt. Eine derartige gewichtete Abstandsfunktion wird insbesondere über eine Gradienten- Matrix realisiert.

Gemäß einer bevorzugten Ausführungsform der Erfindung ist vorgesehen, dass bei dem Überführen der entsprechenden Logikelemente aus der weiteren Partition in die erste Partition solche Logikelemente bevorzugt werden, die nahe dem aktuellen Verlauf der Partitionsgrenze der ersten Partition liegen.

Gemäß einer weiteren bevorzugten Ausführungsform der Erfindung ist eine sukzessive Überführung einzelner Logikelemente aus unmittelbar an die Partitionsgrenze angrenzenden Grenzregionen der weiteren Partition oder mindestens einer der weiteren Partitionen in die erste Partition vorgesehen, bis der Bedarf an zusätzlichen Logikelementen in der ersten Partition gedeckt ist.

Dabei ist bevorzugt vorgesehen, dass bei jeder einzelnen Überführung solche Grenzregionen bevorzugt werden, in denen mindestens zwei der benötigten Logikelemente in möglichst hoher räumlicher Dichte vorhanden sind.

Die Auswahl/Identifizierung des als nächstes zu überführenden Logikelements auf der Fläche der weiteren Partition geschieht bevorzugt anhand einer zweidimensionalen Auswahlfunktion, die auf folgende Weise erstellt wird:

(a) Erstellung einer Verteilungsfunktion für jede Klasse von benötigten Logikelementen auf der Fläche der weiteren Partition. Die Verteilungsfunktion ist eine additive Überlagerung von Delta-Distributionen mit einem Delta-Peak an jeder Stelle, an der auf der Fläche der weiteren Partition ein Logikelement der jeweils gesuchten Klasse hinterlegt ist.

(b) Erstellung einer Dichtefunktion für jede Klasse von benötigten Logikelementen durch Faltung der Verteilungsfunktion mit einer Abstandsfunktion.
Die Abstandsfunktion zeichnet sich dadurch aus, dass sie an der Referenzstelle (0, 0) ein globales Maximum hat und mit zunehmendem Abstand von der Stelle (0, 0) in jeder Richtung streng monoton fällt. Eine geeignete Abstandsfunktion ist zum Beispiel eine Gaußsche Normalverteilung. Als Ergebnis der Faltungsoperation ist die Dichtefunktion eine Überlagerung vieler Abstandsfunktionen, also z.B. vieler Gaußscher Normalverteilungen, deren Maxima jeweils ortsgleich mit einem Logikelelement der jeweils gesuchten Klasse sind. Ein großer Funktionswert der Dichtefunktion an einer bestimmten Stelle bedeutet, dass an besagter Stelle eine hohe Dichte der jeweils gesuchten Logikelemente vorliegt, d.h. dass sich mindestens eines der gesuchten Logikelemente in unmittelbarer Nähe befindet.

(c) Erstellung einer Gradientenfunktion auf der Fläche der zu bestehlenden Partition, die an der bisherigen Partitionsgrenze ihr Maximum hat und in Richtung der gegenüberliegenden Grenze streng monoton abfällt.

(d) Erstellung der Auswahlfunktion durch Multiplikation aller erstellten Dichtefunktionen und der Gradientenfunktion.

Die Auswahlfunktion wird insbesondere als Matrix dargestellt, wobei jedes Matrixelement dieser Matrix ein Logikelement auf der Partition repräsentiert und der Wert jedes Eintrags den Wert der Auswahlfunktion an der entsprechenden Stelle repräsentiert. Dabei ist es alternativ möglich, dass die Überführung am Ende durchgeführt wird oder dass alle Funktionen von Anfang an als Matrizen darstellt und die Darstellung der Auswahlfunktion als Matrix durch elementweise Multiplikation (Hadamard-Produkt) erfolgt.

Eine mathematische Faltung ist anschaulich eine Funktion, die abhängig von einer Verschiebung zweier Funktionen gegeneinander deren Grad an Überlagerung angibt. (Siehe z.B. der Wikipedia-Eintrag "Faltung (Mathematik)".)

Mit Vorteil ist vorgesehen, dass das Bereitstellen der Zuordnung zwischen jeweiliger Partition und Programmroutine bei Schritt (i) ein Aufteilen der Fläche der programmierbaren Gatteranordnung in diese Partitionen ist.

Bei einer bevorzugten Ausgestaltung der Erfindung ist eine dritte Klasse von Logikbausteinen und eine dritte Ressourcen-Verteilungsfunktion vorgesehen. Die Gesamt-Ressourcen-Verteilungsfunktion ist das Produkt aus Gradientenfunktion, erster, zweiter und dritter Ressourcen-Verteilungsfunktion.

Gemäß noch einer weiteren bevorzugten Ausführungsform der Erfindung ist vorgesehen, dass zumindest eine der unterschiedlichen Klassen von Logikelementen eine Klasse aus der folgenden Liste von Klassen ist:

CLB-Klasse (CLB: Configurable Logic Block),
DSP-Klasse (DSP: Digital Signal Processing) und
RAM-Klasse (RAM: Random Access Memory).

Diese Klassen von Logikelementen sind durchaus typisch für FPGA.

Schließlich ist bezüglich dieses Verfahrens mit Vorteil vorgesehen, dass zur Planung der Ausgestaltung der weiteren Partitionen analog dem vorstehend genannten Verfahren vorgegangen wird, wobei eine dieser weiteren Partitionen als erste Partition und die zugeordnete Programmroutine als erste Programmroutine betrachtet wird. Auf diese Weise wird die Ausgestaltung aller Partitionen inkrementell durchgeführt.

Die Erfindung betrifft weiterhin ein Verfahren zur Planung einer unterschiedliche Klassen von Logikelementen vorgegebener Position umfassenden programmierbaren Gatteranordnung für eine Mehrzahl von Programmroutinen, die zumindest eine erste Programmroutine und mindestens eine weitere Programmroutine umfasst, wobei Partitionen für die Programmroutinen ausgestaltet werden. Es ist vorgesehen, dass das Ausgestalten der Partitionen mittels des vorstehend genannten Verfahrens zur Planung der Ausgestaltung von Partitionen für eine programmierbare Gatteranordnung erfolgt. Das Verfahren kann auch als Floor- Planning-Verfahren bezeichnet werden und ist insbesondere ein computerunterstütztes Verfahren. Neben der Ausgestaltung der Partitionen umfasst dieses Verfahren auch die Planung der Verknüpfung der Logikelemente.

Mit anderen Worten beschreibt dieses Verfahren die Verwendung des vorstehend genannten Verfahrens zur Planung der Ausgestaltung von Partitionen für die Planung der unterschiedliche Klassen von Logikelementen vorgegebener Position umfassenden programmierbaren Gatteranordnung insgesamt.

Dabei ist bevorzugt vorgesehen, dass das Verfahren ein inkrementelles Verfahren ist.

Bei dem computerbasierten System mit einer Prozessoreinheit ist vorgesehen, dass es zur Durchführung des vorstehend genannten Verfahrens ausgebildet ist.

Bei dem Computerprogrammprodukt ist vorgesehen, dass es Programmteile umfasst, die in einem Prozessor eines computerbasierten Systems geladen zur Durchführung des vorstehend genannten Verfahrens eingerichtet sind.

Nachfolgend wird die Erfindung unter Bezugnahme auf die anliegenden Zeichnungen anhand bevorzugter Ausführungsformen näher erläutert. Es zeigen:

Fig. 1 eine Teilfläche einer als FGPA ausgebildeten programmierbaren Gatteranordnung,

Fig. 2 ein Ablaufdiagramm eines Verfahrens zur Planung der Ausgestaltung von Partitionen für eine programmierbare Gatteranordnung gemäß einer bevorzugten Ausführungsform,

Fig. 3 einen groben Ablaufplan eines Floorplanner-Verfahrens,

Fig. 4 eine als FGPA ausgebildete programmierbare Gatteranordnung, aufgeteilt nach Logikelemente-Klassen,

Fig. 5 eine schematische Darstellung einer 2D-Faltung der RAM Ressourcen mit einem Gauß-Filter,

Fig. 6 einen Ausschnitt aus der als FGPA ausgebildeten programmierbaren Gatteranordnung,

Fig. 7 links: Beispielhafte Gradientenmatrix; Mitte: Horizontale Unterteilung der oberen Hälfte eines FPGAs mit der Ressourcenmatrix berechnet aus CLB-, RAM- und Gradientenmatrix; rechts: Die überführten Ressourcen aus einer weiteren Partition,

Fig. 8 eine graphische Veranschaulichung von Versuchsreihen zur Platzierungseffizienz des neuen Floorplanning Verfahrens,

Fig. 9 eine Zerlegung eines gefunden Floorplans in Rechtecke, und

Fig. 10 eine als FGPA ausgebildete programmierbare Gatteranordnung mit einer Wrapper Partition und einer FPGA Model Partition, auf die das Floorplaning für den modularisierten Build Prozess angewendet werden kann.

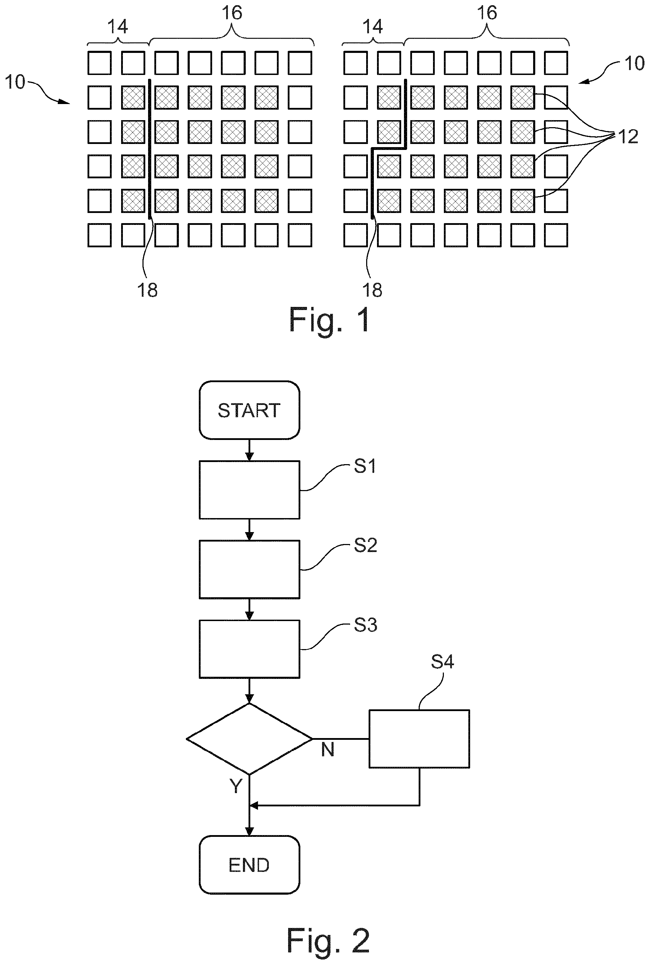

Die Fig. 1 zeigt links wie rechts eine Teilfläche einer als FGPA (FGPA: Field Programmable Gate Array) ausgebildeten programmierbaren Gatteranordnung 10. Auf der abgebildeten Teilfläche sind Logikelemente 12 gemäß einem vorgegebenen Aufbau angeordnet. Bei den hier im Beispiel dargestellten Logikelementen handelt es sich um CLBs (CLB: Configurable Logic Block). CLB ist eine von mehreren Klassen von bei programmierbaren Gatteranordnungen 10 typischerweise genutzten Logikelementen 12.

Soll die programmierbare Gatteranordnung 10 nun für eine Mehrzahl von Programmroutinen genutzt werden, so muss man diese in unterschiedliche Partitionen 14, 16 aufteilen. Im Folgenden wird von einer ersten Partition 14 und mindestens einer weiteren Partition 16 gesprochen. Die Aufteilung erfolgt dynamisch, ist also veränderbar. Durch diese Aufteilung entsteht eine entsprechende Partitionsgrenzen 18 zwischen der ersten und der weiteren Partition 14, 16. Die Änderung der Aufteilung in die Partitionen 14, 16 erfolgt über ein Verändern des Verlaufs der Partitionsgrenze 18 zwischen diesen Partitionen 14, 16. In Fig. 1 ist auf der linken Seite der aktuelle Verlauf der Partitionsgrenzen 18 vor der entsprechenden Änderung ihres Verlaufs und auf der rechten Seite der Verlauf der Partitionsgrenzen 18 nach der entsprechenden Änderung des Verlaufs der Partitionsgrenze 18 gezeigt.

Die Fig. 2 zeigt einen Programmablaufplan eines Verfahrens zur Planung der Ausgestaltung von Partitionen für die programmierbare Gatteranordnung 10. Diese programmierbare Gatteranordnung 10 weist mehrere unterschiedliche Klassen von Logikelementen 12 vorgegebener Position auf.

Die programmierbare Gatteranordnung 10 soll nun für das Bearbeiten zumindest einer ersten Programmroutine und mindestens einer weiteren Programmroutine geplant werden. Dazu werden die folgenden Schritte abgearbeitet:

Schritt S1: Bereitstellen einer Zuordnung der ersten Partition 14 zu der ersten Programmroutine und der mindestens einen weiteren Partition 16 zu der mindestens einen weiteren Programmroutine. Zu diesem Zweck ist es üblich, die Gatteranordnung 10 in zusammenhängende räumliche Partitionen 14, 16 zu unterteilen, deren Anzahl gleich der Anzahl von Programmroutinen ist.

Schritt S2: Ermitteln eines Bedarfs der ersten Programmroutine an den einzelnen Klassen von Logikelementen 12.

Schritt S3: Abgleich dieses Bedarfs mit den in der ersten Partition 14 vorhandenen Ressourcen an Logikelementen 12 entsprechender Klasse.

Schritt S4: Überführen von zumindest einem Logikelement 12 entsprechender Klasse aus der weiteren Partition 16 oder mindestens einer der weiteren Partitionen in die erste Partition 14 durch Verlagern der Partitionsgrenze zwischen diesen Partitionen 14, 16, wenn über die Abfrage A festgestellt wird, dass der Bedarf der ersten Programmroutine an Logikelementen 12 dieser Klasse die entsprechenden Ressourcen an Logikelementen 12 der ersten Partition 14 übersteigt.

Im weiteren Verlauf soll das Vorgehen nun am Beispiel eines Floorplans für eine FPGA-Teilregion diskutiert werden, wobei das gesagte auch für jede andere Art von programmierbarer Gatteranordnungen 10 gilt.

Das grundsätzliche Vorgehen, wie man durch Unterteilung eines (Nutzer-)Modells und den hierarchischen Design Flow einen Geschwindigkeitsvorteil erzielen kann, ist in der eingangs genannten Patentschrift US 9,870,440 B2 beschrieben und soll daher an dieser Stelle nicht weiter ausgeführt werden. Kernaufgabe der vorliegenden Erfindung ist das Finden eines geeigneten Floorplans im FPGA, um möglichst viele Teilmodelle (Programmroutinen) parallel implementieren zu können. Gegeben sind demnach eine Menge von Teilmodellen/Modulen bzw. Programmroutinen und ein FPGA oder eine FPGA-Subfläche. Das Ergebnis soll ein Floorplan sein, der für jedes Teilmodell die folgenden Kriterien möglichst optimal erfüllt:

- Geforderte Logikzellen/CLBs eines Teilmodells müssen bereitgestellt werden;
- Geforderter Speicherbedarf/RAMs eines Teilmodells muss bereitgestellt werden;
  Geforderter DSP Bedarf eines Teilmodells muss bereitgestellt werden;
- Der Verschnitt an Ressourcen an Logikelementen 12 (CLBs, RAMS, DSPs) sollte möglichst gering sein;
- Die Formen der FPGA Regionen sollten möglichst ausgewogen sein (z.B. quadratisch oder leicht rechteckig, keine extreme Formen), damit die Leitungslängen und damit die Signallaufzeiten und die maximale Taktfrequenz innerhalb eines Teilmodels nicht unnötig negativ beeinflusst werden; und

- Die Anzahl und die Leitungslängen zwischen den Modulen müssen möglichst gering gehalten werden.

Ein klassisches Verfahren zum Erstellen eines Floorplan oder zur Platzierung von Gattern in VLSI-Schaltungen (Very-Large-Scale Integration) ist die Bi-Partitionierung. Hierzu wird die verfügbare Fläche in zwei Hälften unterteilt und die Module z.B. in allen Kombinationen auf die zwei Flächen verteilt und das Ergebnis anhand einer Bewertungsfunktion bewertet. Die Bewertungsfunktion kann unterschiedliche Kriterien für eine akzeptable Verteilung von Modulen widerspiegeln, z.B. eine möglichst geringe Anzahl von die Partitionsgrenzen überquerenden Kommunikationsleitungen oder eine möglichst gleichmäßige Verteilung von Resourcen auf die Partitionen. Danach wird in jeder der beiden Hälften rekursiv wieder die Fläche in zwei Hälften unterteilt, bis in jeder Partition nur noch ein Modul übrig bleibt.

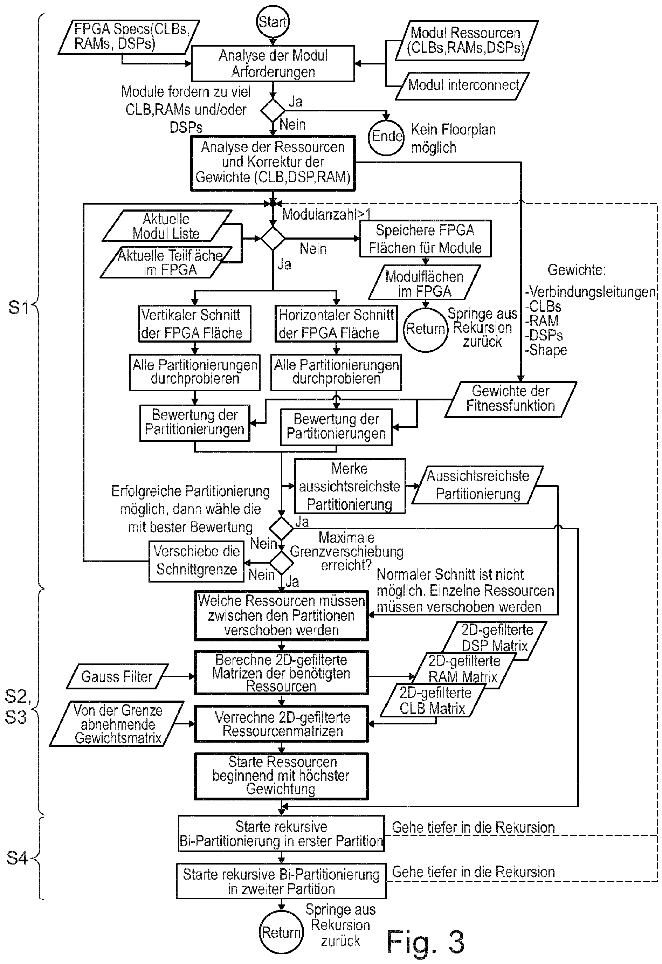

In Fig. 3 ist der grobe Ablauf des Floorplannings, also der Planung einer programmierbaren Gatteranordnung für eine Mehrzahl von Programmroutinen, dargestellt. Als erster Schritt wird die FPGA Größe und die Summe aller Programmroutinen bzw. entsprechender Module für diese Programmroutinen analysiert, um herauszufinden, ob die den Programmroutinen entsprechenden Teilmodelle/Module überhaupt bzgl. der Ressourcen (Logikelemente: CLBs, RAMs, DSPs) in das FPGA passen. An dieser Stelle werden auch direkt Engpässe analysiert, die später in Form von veränderlichen Gewichten in die Bewertungsfunktion einer Partitionierung/Platzierung und das Überführen ("Stehlen") von Ressourcen aus weiteren Partitionen 16 einfließen können. Wenn z.B. die Summe aller RAM- und DSP-Anforderungen der Teilmodelle/Module nahe an der Gesamtmenge des FPGAs sind, so ist die gleichmäßige Verteilung der RAMs und DSPs bei einer Unterteilung/Bi-Partitionierung höher zu bewerten, als die gleichmäßige Verteilung der ggf. im Überfluss vorhandenen CLBs.

Sind die geforderten Module-Ressourcen grundsätzlich geringer als die des FPGAs, kann eine erste Partitionierung der FPGA Fläche erfolgen. Hierbei wird zunächst ein horizontaler Schnitt durchgeführt und anschließend alle n Module in allen $2n$-1 - 1 Kombinationen auf die beiden Partitionen verteilt und das Ergebnis bewertet (siehe Abbildung 3). In der Formel steht -1, da der Fall alle Module in einer Partition kein sinnvolles Ergebnis ist. Die Kombinationen ergeben sich durch jeweils m Module in Partition 1 und n-m Module in Partition 2 für alle $m \in \{1 ... (n - 1)\}$. Der horizontale Schnitt wird wieder aufgehoben und die Bewertung für den vertikalen Schnitt durch die Fläche wiederholt.

Insbesondere bei vielen Modulen steigt die Berechnungsdauer durch die hohe Anzahl möglicher Modulkombinationen pro Partitionierungsschritt stark an. Hierzu gibt es verschiedene Verfahren, um das zu reduzieren (z.B. Heuristiken, wie die Nonlinear Integer Programming (NLP)), sodass an dieser Stelle nicht weiter darauf eingegangen wird. In unseren Fällen gehen wir immer von einer geringen Anzahl an Modulen aus, die z.B. der Anzahl der Subsysteme im Kundenmodel auf oberster Ebene entspricht, so dass man alle Kombinationen durchprobieren kann. Dies dauert lediglich einige Sekunden.

Nachdem das FPGA sowohl horizontal als auch vertikal in der Mitte durchgeschnitten wurde, wird geschaut, welcher Schnitt (horizontal oder vertikal) und welche Aufteilung der Module die beste Bewertung bekommen hat. Hierzu gibt es eine Bewertungsfunktion/Fitness Funktion, welche die Kriterien von oben berücksichtigt (Gleichmäßige CLB Verteilung usw.). Die beste Aufteilung wird sich gegen Ende eines ersten Programmteils gemerkt (vergl. "Merke aussichtsreichste Partitionierung"). Wurde eine korrekte Aufteilung gefunden, werden rekursiv die beiden entstandenen Partitionen nach dem obigen Schema unterteilt, bis nur noch ein Modul pro Partition 14, 16 übrig bleibt und damit die Floorplan-Fläche für das Modul gefunden ist.

In vielen Fällen funktioniert jedoch ein einfacher Schnitt in der Mitte nicht, daher wird die Schnittgrenze ggf. verschoben bis eine Platzierung der gegebenen Module möglich ist (siehe "Verschiebe Schnittgrenze" in der Fig. 3). In vielen Fällen ist jedoch selbst mit der Verschiebung der Grenze keine Platzierung möglich. Dies liegt einfach daran, dass eine gegebene Menge an Modulen vielleicht rein rechnerisch in eine gegebene FPGA-Fläche reinpasst, da man, wie oben dargestellt, aber nur gerade horizontale/vertikale Schnitte durchführen kann, ist es ggf. nicht möglich die Module tatsächlich zu platzieren.

Die bereits erwähnte Fig. 1 veranschaulicht ein solches Beispiel. Es sollen zwei Module auf einer FPGA Subfläche von 5 x 4 = 20 CLBs platziert werden. Ein Modul benötigt 18 CLBs, ein weiteres 1 CLB. Rein rechnerisch passen die beiden Module also in die FPGA-Subfläche. Mit geraden Schnitten ist jedoch keine Unterteilung möglich. Der linke Teil von Fig. 1 zeigt den bestmöglichen Schnitt (4 CLBs zu 16 CLBs). Wenn man hingegen einzelne CLB "stehlen", also Überführen, kann, ist eine Unterteilung möglich (rechts dargestellt). Dies ist ein sehr einfaches Beispiel, deutlich komplexer wird es, wenn neben den CLBs auch noch die inhomogen verteilten RAMs und DSP berücksichtigt werden müssen. Insbesondere bei einer hohen Auslastung der FPGAs, kommt man in der Regel mit der einfachen Bi-Partitionierung und auch mit der Bi-Partitionierung mit Grenzverschiebung alleine nicht zu einem vollständigen FPGA-Floorplan.

Daher liegt im Ablaufplan der Fig. 3 ab "Maximale Grenzverschiebung erreicht" die Zuordnung gemäß Schritt S1 des Verfahrens aus Fig. 2 vor. In diesem Zweig ist die rein rechnerische Anzahl der Logikelemente 18 der unterschiedlichen Klassen (hier: CLBs, RAMs und DSPs) der FPGA-Fläche größer oder gleich der Summe der Ressourcen der Module, eine Platzierung ist jedoch trotzdem nicht möglich (auch nicht mit Grenzverschiebung). In diesem Fall müssen einzelne Ressourcen aus der angrenzenden Partition 16 überführt ("gestohlen") werden. Um die Überschneidung der benachbarten Partitionen 14, 16 so gering wie möglich zu halten, ist es wichtig, grenznahe Logikelemente 18 der entsprechenden Klasse zu überführen. Wenn mehrere Klassen von Logikelementen 12 knapp sind, z.B. CLBs und RAMs, dann sollten diese auch möglichst nahe zusammenliegen, damit die Routing Ressourcen der Partition nicht an mehreren Stellen von der anderen Partition genutzt werden müssen. Es muss z.B. vermieden werden, dass CLBs aus der einen Ecke und RAMs aus einer ganz anderen Ecke überführt werden.

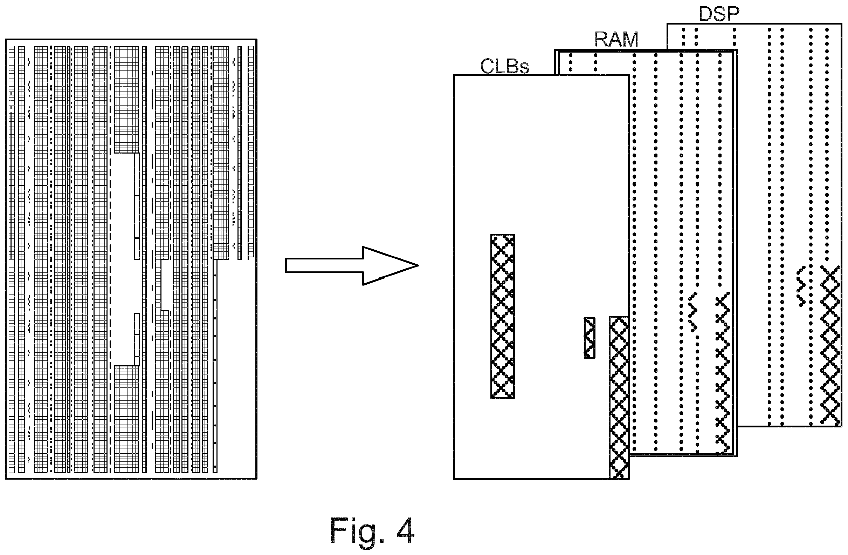

Um das datentechnisch verarbeiten zu können, werden die Ressourcen als separate Lagen in Form von Matrizen modelliert. Auf der rechten Seite von Fig. 4 sind die drei Ressourcenlagen beispielhaft dargestellt.

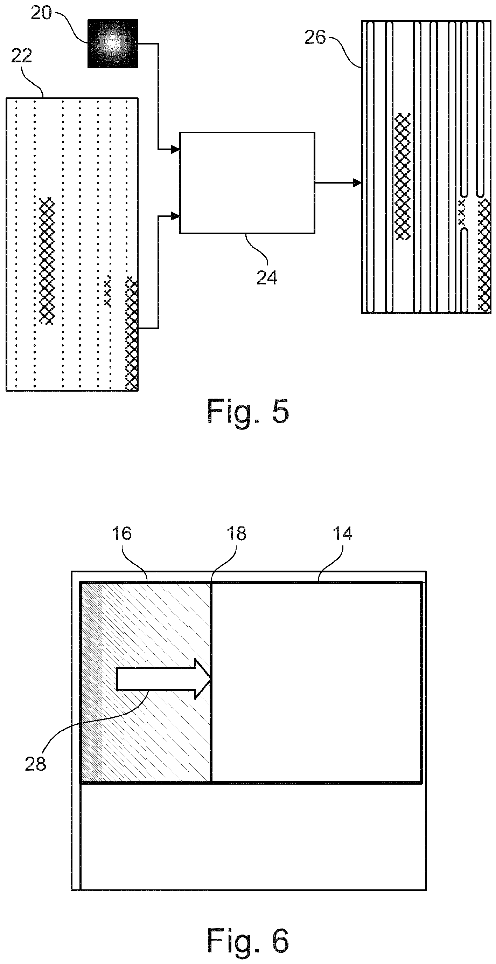

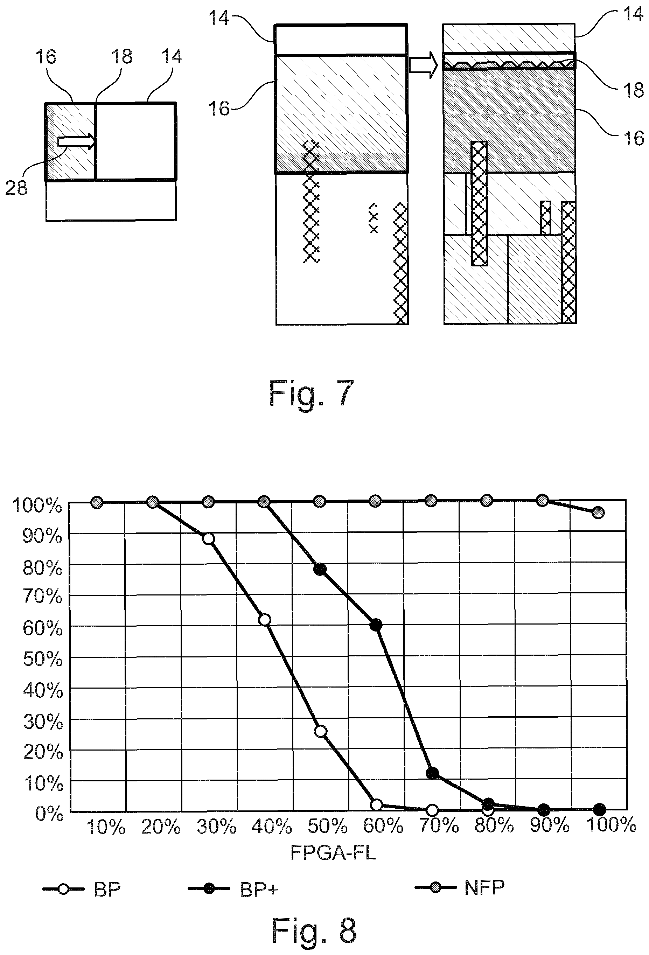

Als nächstes werden die kritischen Ressourcen-Matrizen einer 2D-Faltung mit einem Filter (z.B. Gauß-Filter) 20 unterzogen, damit die einzelnen Ressourcen-Logikelemente einen größeren Einflussbereich in ihrer Matrix erhalten. Die Fig. 5 zeigt dies in einer schematischen Darstellung. Dabei wird eine Verteilung der verfügbaren Logikelemente 22 (z.B. verfügbare FPGA-RAMs) mit dem besagten Gauß-Filter 20 per 2D-Faltung 24 in eine entsprechende Verteilung von 2D-gefilterten Logikelementen 22 überführt. Um die grenznahen Ressourcen der weiteren Partition 16 höher zu gewichten, wird eine zusätzliche Matrix generiert, die eine von der Grenze 18 abfallende Gewichtung vornimmt - siehe Fig. 6 mit Gradient (Pfeil 28). Anschließend werden alle benötigten 2D-gefilterten Ressourcenmatrizen $C_{CLB}$, $R_{RAM}$, $D_{DSP}$ und die Gradienten-Matrix G miteinander verrechnet (siehe linken Teil von Fig. 7). Die Berechnung der resultierenden Matrix S für die Partition, aus der Ressourcen "gestohlen" werden sollen (in Fig. 7 als weitere Partition 16 visualisiert) erfolgt dabei über die elementweise Multiplikation der Matrizen (Hadamard-Produkt) unter Einbeziehung der skalaren Gewichtung nach der untenstehender Formel. Wobei die Skalare $\alpha$, $\beta$, $\gamma$ jeweils entweder 0 (Ressourcen werden nicht benötigt) oder 1 (Ressourcen werden benötigt) sind.

$$ S = G \circ (\alpha \cdot C_{CLB}) \circ (\beta \cdot R_{RAM}) \circ (\gamma \cdot D_{DSP}) $$

Nachdem die 2D-gefilterte Ressourcenmatrizen und die Gradienten-Matrix miteinander verrechnet wurden, müssen lediglich nach und nach die benötigten Ressourcen mit der höchsten Wertung der anderen Partition zugewiesen werden. Auf diese Weise ist es möglich Floorplans zu erstellen, die mit einfacher Bi-Partitionierung nicht möglich wären.

Die Effizienz des Verfahrens wurde in Versuchsreihen mit 1500 Platzierungen untersucht (je 50 Ressourcenverteilungen mit 10%, 20% ... 90% bis 100% FPGA Füllstand, für jede der drei Strategien). Ein Füllstand von 50% bedeutet hier, dass die Summe der Modul CLBs 50% des FPGA belegen. Das gleiche gilt für RAM und DSPs. Die Ergebnisse für die drei Platzierungsstrategien sind in Fig. 8 dargestellt. Es ist deutlich erkennbar, dass die reine Bi-Partitionierungsstrategie (BP) bereits bei einem Füllstand von 30% deutlich einbricht. Die Bi-Partitionierungsstrategie mit Grenzverschiebung (BP+) kann immerhin bis ca. 40% FPGA Füllstand noch alle Module Platzieren, bricht aber danach ein. Lediglich das neue Verfahren (NFP: neues Floorplanning) kann 100% erreichen.

Im Folgenden soll die Transformation des matrixbasierten Floorplans in FPGA-Notation diskutiert werden.

Der vorgestellte Algorithmus liefert als Ergebnis den Floorplan des FPGA in Form einer Matrix. Dabei haben die Elemente der Matrix jeweils den Wert der Modulnummer des ihnen zugeordneten Moduls. Die Partitionen 14, 16 für die einzelnen Module sind somit (auch visuell) einfach identifizierbar (vgl. Fig. 7 rechts).

In den FPGA Tools erfolgt die Partitionierung der FPGA Fläche in der Regel in einer anderen Codierung. Üblich ist es, die Partitionen aus Rechtecken zusammenzusetzen, die im Falle von Xilinx-FPGAs Pblocks genannt werden. Da die Anzahl der Pblocks die Performance bei der Übertragung des Floorplans beeinflusst, ist hier das Ziel, die Anzahl der Pblocks so gering wie möglich zu halten. Aus diesem Grund erfolgt die Transformation der Matrix Partitionen in Pblock Partitionen auf Basis des "maximum rectangle algorithm" (D. Vandevoorde), der das jeweils größtmögliche Rechteck in einer Fläche findet. Für die Transformation wird der Algorithmus in dieser Meldung iterativ angewendet, bis die gesamte Fläche einer Partition 14, 16 durch Rechtecke (Pblocks) repräsentiert wird.

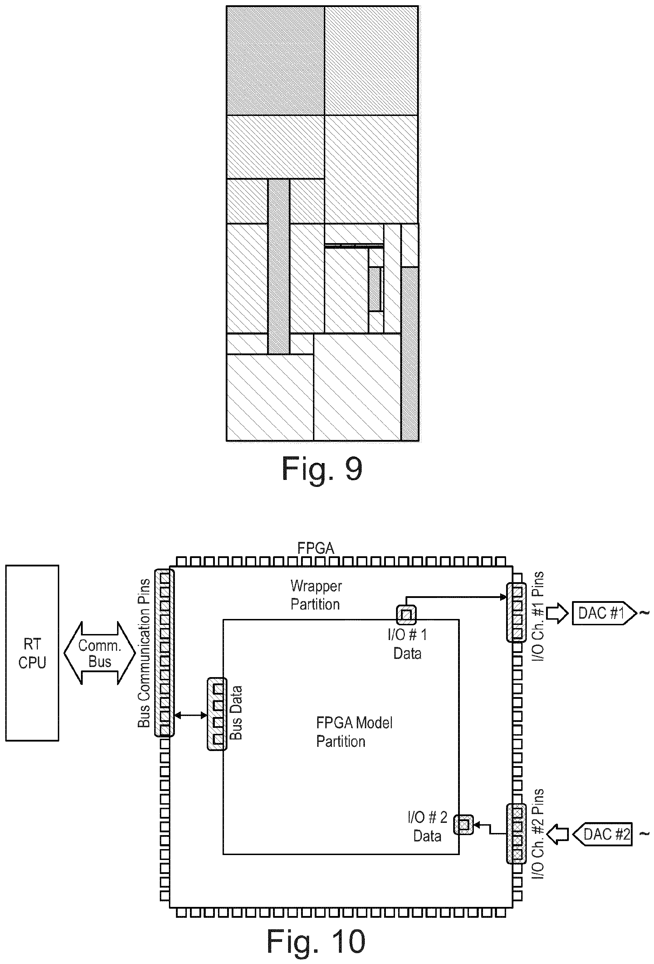

Die Fig. 9 zeigt eine Zerlegung eines gefunden Floorplans in Rechtecke. Dabei können mehrere Rechtecke zu einer Partition 14, 16 gehören.

Da der Entwicklungsprozess eines FPGA Models mehrere Iterationen durchläuft, wurde in der eingangs genannten Patentschrift US 9,870,440 B2 bereits beschrieben, dass es bei einem Folgebuild der FPGA Applikation zunächst zu einer Analyse kommt, ob der bestehenden Floorplan für die evtl. veränderten Modulgrößen oder die veränderte Modulanzahl noch anwendbar ist. Die größtmögliche Wiederverwendung des bestehenden Floorplans ist wünschenswert, da unveränderte Module nicht neu gebaut werden müssen, wenn ihre Partition unverändert bleibt. Dadurch verringert sich die Aufbauzeit ("Buildzeit").

Um der Erstellung eines neuen Floorplans vorzubeugen können im Vorfeld folgende Maßnahmen getroffen werden:

- Wenn genügend Reserven im FPGA vorhanden sind, kann beim initialen Floorplanning eine Partition der Größe p mit $p \in \{0...(\text{FPGA Ressourcen} - \text{Ressourcen aller Module})\}$ als Platzhalter für die Partitionen zukünftiger Module reserviert werden.

- Die geforderten Ressourcen aller Module werden vor dem initialen Floorplan mit einem Faktor r mit $r \in \{1...\text{FPGA-Ressourcen/Ressourcen aller Module}\}$
multipliziert, damit die resultierenden Partitionen eine Reserve für alle Module vorsehen.

Im Nachhinein können folgende Maßnahmen getroffen werden:

- Unterbringung neuer Module
  o Partitionen von nicht mehr benutzten Modulen können, wenn sie nebeneinander liegen, zunächst zusammengefasst und anschließend für neue Module verwendet werden, wenn keine Reservepartition mehr vorhanden ist.
- Vergrößerung von vorhandenen Partitionen

  ∘ Der initiale Floorplanning Algorithmus kann dazu die Partitionen beibehalten und in Modulen, deren Ressourcenbedarf über ihre Partitionsressourcen hinausgewachsen ist, nur die Schritte Partitionsgrenzen verschieben und "Stehlen" von Ressourcen ausführen. Dabei werden Ressourcen von anderen Partitionen mit folgender Priorität beansprucht:

  - Nicht mehr genutzte Nachbarpartition
  - Nachbarpartition mit den meisten Reserven oder der geringsten Rebuildzeit (aber nur, wenn dadurch nicht mehrere Module neu gebaut werden müssen)
  - Nachbarpartitionen von Nachbarpartitionen, die vom Routing noch gut angebunden werden können.
  - Dabei können in einem ersten Schritt die tatsächlich verwendeten Ressourcen der bereits platzierten Module in den Partitionen, von denen Ressourcen beansprucht werden sollen, in den Ressourcenmatrizen (CLB, RAMs, DSP) ausmaskiert werden.
  • Dadurch werden durch das vorgestellte Floorplanning-Verfahren nur die tatsächlich noch freien Ressourcen beansprucht. Die auf diese Weise verkleinerten Module müssen nicht neu gebaut werden.
  • Sollte das zu keinem Ergebnis führen, kann in einem zweiten Schritt auf die Ausmaskierung verzichtet werden. Dadurch stehen mehr potentielle Ressourcen an der Grenze zur beanspruchenden Partition zur Verfügung. Das Modul, von dem Ressourcen beansprucht wurden, muss jedoch in seiner verkleinerten Partition neu gebaut werden.

  ∘ Führt das Verschieben der Partitionsgrenzen und "Stehlen" von Ressourcen nicht zum Erfolg kann ein komplett neuer Floorplan erstellt werden.
  - Dadurch kann die Gesamtressourcenlage neu bewertet werden und die vorgestellten Gewichtungsfunktionen führen zu einem besseren Gesamtfloorplan für die neue Situation.

Verwendung des Floorplannings in Unterregionen von FPGAs Das vorgestellte Floorplanning und Update des Floorplans kann 1:1 von der Verplanung der Gesamt-FPGA Fläche auf eine Sub-Region übertragen werden. Das ist wichtig, da oft nicht die gesamte Fläche eines FPGAs für die freie Kundenmodellierung zur Verfügung steht. Im Falle des dSPACE FPGA Programming Blocksets wird das Kundenmodel z.B. in einen VHDL Wrapper eingebettet, der ein festes Interface zwischen Kundenmodel auf der einen Seite und Prozessorbus und dSPACE I/O Kanälen auf der anderen Seite anbietet. Der Wrapper übernimmt in dem Fall also die komplette Anbindung des Kundenmodels an die Außenwelt und muss deswegen in die Region des FPGAs platziert werden, in der die I/O Treiber für die FPGA Pins liegen (siehe Fig 10). Generell sind auch mehrere Wrapper im FPGA denkbar. Um den Verschnitt durch die Wrapper zu verringern, können die von den Wrappern und den benutzten Komponenten des "Component Stacks" belegten Ressourcen beim Floorplanning der Pblocks als belegt markiert werden.

Im Folgenden sollen wichtige Elemente der Erfindung noch einmal in Stichpunkten widergegeben werden:

• Dynamische Anpassung der Gewichtsfunktion an den vorherrschenden Engpass. Zum Beispiel RAMs sind kritisch, weil die Summe alle Modulanforderungen nah an der Grenze der FPGA RAMs liegt, wohingegen CLB und DSP entspannt sind, dann wird die Gewichtung entsprechend angepasst, so dass bei der Bewertung/Auswahl der Platzierungen stärker auf die knappen Ressourcen geachtet wird.
• Verfahren an welchen Stellen Ressourcen in die andere Region ausgedehnt werden

  ∘ Einfaches Bi-Partitionieren funktioniert oft nicht, da sonst zu viele Ressourcen ungenutzt bleiben
  ∘ Bestimmung der fehlenden Ressourcen (z.B. CLBs und RAMs)
  ∘ Ressourcen Matrizen werden mit einer Filter-Funktion gefaltet (z.B. Gauß-Filter 20).
  ∘ Erstellung einer Gradientenmatrix

◦ Verrechnung der gefilterten Ressourcen mit der Gradientenmatrix
◦ "Stehlen" einzelner Ressourcen, so dass die Partitionen 14, 16 möglichst "minimal invasiv" geändert werden, indem die Ressourcen mit der höchsten Bewertung als erstes "gestohlen" werden.

- Verfahren zum Update eines Floorplans, bei dem bei der Ausdehnung von Regionen in eine andere Region hinein das Modul der verkleinerten Region nicht neu gebaut werden muss.
- Das Floorplanning lässt sich sowohl mit zusätzlichen Wrappern, als auch dem "Component Stack" Verfahren in einem FPGA kombinieren, indem die Ressourcen dieser bereits belegten Bereiche in den Ressourcematrizen für das Floorplaning ausmaskiert werden.

Bezugszeichenliste

| | |
|---|---|
| programmierbare Gatteranordnung | 10 |
| Logikelement | 12 |
| Partition, erste | 14 |
| Partition, weitere | 16 |
| Partitionsgrenze, aktuell | 18 |
| Gauß-Filter | 20 |
| Verfügbare FPGA RAMs | 22 |
| 2D-Faltung | 24 |
| 2D-gefilterte RAMs | 26 |
| Pfeil (Gradient) | 28 |
| Abfrage | A |
| Bi-Partitioning | BP |
| Erweitertes Bi-Partitioning | BP+ |
| Neues Floor-Planning | NFP |
| Schritt 1 | S1 |
| Schritt 2 | S2 |
| Schritt 3 | S3 |
| Schritt 4 | S4 |

**Patentansprüche**

1. Verfahren zur Planung der Ausgestaltung von Partitionen (14, 16) für eine unterschiedliche Klassen von Logikelementen (12) vorgegebener Position umfassende programmierbare Gatteranordnung (10) und eine Mehrzahl von Programmroutinen, die zumindest eine erste Programmroutine und mindestens eine weitere Programmroutine umfasst, mit den folgenden Verfahrensschritten:

   Bereitstellen einer Zuordnung einer ersten Partition (14) der programmierbaren Gatteranordnung (10) zu der ersten Programmroutine und mindestens einer weiteren Partition (16) der programmierbaren Gatteranordnung zu der mindestens einen weiteren Programmroutine, wobei diese Partitionen (14, 16) durch eine aktuelle Partitionsgrenze (18) voneinander getrennt sind (S1),
   Ermittlung eines Bedarfs der ersten Programmroutine an den einzelnen Klassen von Logikelementen (12) (S2),
   Abgleich dieses Bedarfs mit den in der ersten Partition (14) vorhandenen Ressourcen an Logikelementen (12) entsprechender Klasse (S3), und
   Auswählen und Überführen von zumindest einem Logikelement (12) entsprechender Klasse aus der weiteren Partition (16) oder mindestens einer der weiteren Partitionen in die erste Partition (14) durch Veränderung des Verlaufs der Partitionsgrenze (18) zwischen diesen Partitionen (14, 16), wenn der Bedarf der ersten Programmroutine an Logikelementen (12) dieser Klasse die entsprechenden Ressourcen der ersten Partition (14) übersteigt (S4),
   derart, dass die Partitionsgrenze (18) vor und/oder nach der Veränderung ihres Verlaufs in mindestens einem Abschnitt gewunden verläuft.

2. Verfahren nach Anspruch 1, **dadurch gekennzeichnet, dass**
   bei dem Überführen des zumindest einen entsprechenden Logikelements (12) aus der weiteren Partition (16) in die erste Partition (14) ein solches Logikelement (12) bevorzugt wird, das im Vergleich zu mindestens einem anderen Logikelement (12) entsprechender Klasse näher an der aktuellen Partitionsgrenze (18) zwischen diesen Partitionen (14, 16) liegen.

3. Verfahren nach Anspruch 1 oder 2, **dadurch gekennzeichnet, dass**
eine Auswahl der zu überführenden Logikelemente (12) über eine gewichtete Abstandsfunktion des Abstandes des jeweiligen Logikelements von dem aktuellen Verlauf der Partitionsgrenze (18) abhängt.

4. Verfahren nach Anspruch 3, **dadurch gekennzeichnet, dass**
eine derartige gewichtete Abstandsfunktion insbesondere über eine Gradienten-Matrix realisiert wird.

5. Verfahren nach einem der vorhergehenden Ansprüche, **gekennzeichnet durch**
eine sukzessive Überführung einzelner Logikelemente (12) aus unmittelbar an die Partitionsgrenze (18) angrenzenden Grenzregionen der weiteren Partition (16) oder mindestens einer der weiteren Partitionen in die erste Partition (14) bis der Bedarf an zusätzlichen Logikelementen (12) in der ersten Partition (14) gedeckt ist.

6. Verfahren nach Anspruch 5, **dadurch gekennzeichnet, dass**
bei jeder einzelnen Überführung solche Grenzregionen bevorzugt werden, in denen mindestens zwei der benötigten Logikelemente (12) in möglichst hoher räumlicher Dichte vorhanden sind.

7. Verfahren nach einem der vorhergehenden Ansprüche, **dadurch gekennzeichnet, dass** Zur Auswahl des als nächstes zu überführenden Logikelements (12) eine zweidimensionale Auswahlfunktion mittels folgender Schritte erstellt wird:

- Erstellung einer Verteilungsfunktion der Logikelemente-Verteilung als Überlagerung von Deltafunktionen, mit einem Delta-Peak überall dort, wo ein entsprechendes Logikelement (14) hinterlegt ist;
- Erstellung einer Dichtefunktion durch Faltung der Verteilungsfunktion mit einer Abstandsfunktion, insbesondere einer Gauss-Funktion, wobei sich die Abstandsfunktion dadurch auszeichnet, dass sie an ihrer Referenz-Stelle ein globales Maximum hat und mit zunehmendem Abstand von dieser Stelle in jeder Richtung streng monoton fällt;
- Erstellung einer Gradientenfunktion auf der Fläche der weiteren Partition (16), die an der aktuellen Partitionsgrenze (18) ihr Maximum hat und in Richtung der Zentrums der weiteren Partition (16) streng monoton abfällt und
- Erstellung der Auswahlfunktion durch Multiplikation aller erstellten Dichtefunktionen und der Gradientenfunktion.

8. Verfahren nach einem der vorhergehenden Ansprüche, **dadurch gekennzeichnet, dass**
zumindest eine der unterschiedlichen Klassen von Logikelementen eine Klasse aus der folgenden Liste von Klassen ist:

Configurable-Logic-Block-Klasse,
Digital-Signal-Processor-Klasse und
Random-Access-Memory-Klasse.

9. Verfahren nach einem der vorhergehenden Ansprüche, **dadurch gekennzeichnet, dass**
zur Planung der Ausgestaltung der weiteren Partitionen (16) analog dem Verfahren nach einem der vorhergehenden Ansprüche vorgegangen wird, wobei eine dieser weiteren Partitionen (16) als erste Partition (14) und die zugeordnete Programmroutine als erste Programmroutine betrachtet wird.

10. Verfahren zur Planung einer unterschiedliche Klassen von Logikelementen vorgegebener Position umfassenden programmierbaren Gatteranordnung (10) für eine Mehrzahl von Programmroutinen, die zumindest eine erste Programmroutine und mindestens eine weitere Programmroutine umfasst, wobei Partitionen (14, 16) für die Programmroutinen ausgestaltet werden, **dadurch gekennzeichnet, dass**
das Ausgestalten der Partitionen (14, 16) mittels eines Verfahrens nach einem der vorhergehenden Ansprüche erfolgt.

11. Verfahren nach Anspruch 10, **dadurch gekennzeichnet, dass**
das Verfahren ein inkrementelles Verfahren ist.

12. Computerbasiertes System mit einer Prozessoreinheit, wobei das System zur Durchführung des Verfahrens nach einem der Ansprüche 1 bis 11 ausgebildet ist.

13. Computerprogrammprodukt umfassend Programmteile, die in einem Prozessor eines computerbasierten Systems geladen zur Durchführung des Verfahrens nach einem der Ansprüche 1 bis 11 eingerichtet sind.

Fig. 1

Fig. 2

Fig. 3

Fig. 4

Fig. 5

Fig. 6

Fig. 7

FPGA-FL

—○— BP    —●— BP+    —◉— NFP

Fig. 8

Fig. 9

Fig. 10

**EP 3 869 380 A1**

Europäisches Patentamt

European Patent Office

Office européen des brevets

**EUROPÄISCHER RECHERCHENBERICHT**

Nummer der Anmeldung

EP 20 15 7861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | XP055518444<br>* Zusammenfassung; Abbildung 3.4 *<br>* Seite 11, Absatz 2 *<br>* Seite 22, Absätze 2,4 *<br>* Seite 24, Absatz 2 - Absatz 3 *<br>* Teil 3.2.1 und 3.2.2 *<br>* das ganze Dokument *<br>-----<br> | 1-6,8-13<br>1-6,8-13<br>7 | INV.<br>G06F30/337<br>G06F30/347<br>G06F30/392<br><br>ADD.<br>G06F115/08 |
| X<br><br><br><br><br><br><br><br><br><br>Y | CHU C C N ET AL: "Nonrectangular Shaping and Sizing of Soft Modules for Floorplan-Design Improvement",<br>IEEE TRANSACTIONS ON COMPUTER AIDED DESIGN OF INTEGRATED CIRCUITS AND SYSTEMS, IEEE SERVICE CENTER, PISCATAWAY, NJ, US,<br>Bd. 23, Nr. 1, 1. Januar 2004 (2004-01-01), Seiten 71-79, XP011104943,<br>ISSN: 0278-0070, DOI: 10.1109/TCAD.2003.819896<br>* Zusammenfassung; Abbildungen 1,4 *<br>* Teil 7 *<br>* das ganze Dokument *<br>----- | 1-6,8-13<br><br><br><br><br><br><br><br><br><br>1-6,8-13 | |
| | | | RECHERCHIERTE SACHGEBIETE (IPC) |
| A | WALDER AND M PLATZNER H: "Non-preemptive multitasking on FPGA: Task placement and footprint transform",<br>INTERNET CITATION,<br>1. Juni 2002 (2002-06-01), XP002383070,<br>Gefunden im Internet:<br>URL:http://citeseer.ist.psu.edu/walder02no npreemptive.thml<br>[gefunden am 2006-05-30]<br>* Zusammenfassung; Abbildungen 3,5 *<br>* Teil 4 und 5 *<br>* das ganze Dokument *<br>----- | 1-13 | G06F |

Der vorliegende Recherchenbericht wurde für alle Patentansprüche erstellt

| Recherchenort | Abschlußdatum der Recherche | Prüfer |
|---|---|---|
| München | 12. August 2020 | Dapp, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                     
& : Mitglied der gleichen Patentfamilie, übereinstimmendes Dokument

EPO FORM 1503 03.82 (P04C03)

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9870440 B2